# EUROPEAN PATENT APPLICATION

(11) **EP 2 843 020 A1**
(43) Date of publication of application: **04.03.2015**
(21) Application number: 13382339.3
(22) Date of filing: 29.08.2013
(51) Int. Cl.: C09J 5/06, C09J 7/04, B32B 5/12, B32B 27/12, B29C 65/00, B64C 1/00

(54) **Laminate for joining parts, and method and system for joining parts**

(71) Applicant: Airbus Operations S.L., 28906 Getafe, Madrid (ES)
(72) Inventor: Cebolla Garrofe, Pablo, E-28906 Getafe-Madrid (ES); Romón Banogon, Carlos, E-28906 Getafe-Madrid (ES)
(74) Representative: ABG Patentes, S.L.

(57) **Abstract**

There is provided a laminate (3) for joining parts (1, 2) of composite material that comprises:
• a first layer (3.1) of adhesive material,
• a second layer (3.2) of preimpregnated composite material, adjacent to the first layer (3.1), and
• a third layer (3.3) of adhesive material, adjacent to the second layer (3.2), and

a method for joining at least two parts (1, 2) of composite material with a laminate (3) according to claim 1, comprising the steps of:
• providing already cured composite material parts (1, 2),
• positioning the laminate (3) for joining between the two cured parts (1, 2),
• applying pressure and temperature to the whole structure comprising the at least two parts (1, 2) and the laminate (3), in such a way that the laminate (3) is cured and the at least two parts (1, 2) are joined together in a resulting structure.

## Description

### TECHNICAL FIELD OF THE INVENTION

The present invention relates to a method for joining a pair of aircraft parts. The joint is made between a first and second cured part of composite material comprising a resin matrix and reinforcing fibres.

### BACKGROUND OF THE INVENTION

Airplanes have been most or totally built up by metallic components providing a good performance in terms of mechanical behaviour but, as a drawback, also providing too much weight.

With the increase of competition among the airlines, airframe manufacturers search new ways of improving specific performances, meaning increasing or maintaining structural characteristics and decreasing weight against metallic builds.

In this document the wording "composite material" is understood as any type of material, for example CFRP (Carbon Fibre Reinforced Polymers), which comprises two or more physically distinguishable parts and mechanically separable, the two or more parts not being able to dissolve among each other. The advantage in the use of CFRP for major structural parts is achieving important weight savings and cost operation decrease. The first aircraft with a large CFRP composition is the Airbus A320, with more than 20%.

Economically competitive ways of manufacturing composite parts have been developed, such as the automation of processes like the pre-preg lay-up (ATL, AFP), cutting, trimming, NDT (Non-destructive Testing) and others. The different CFRP fabrication methods (pre-preg, Resin transfer moulding, dry fibre, etc.), the new polymeric materials, etc, improve the profitability of composite materials.

In summary, composites have been demonstrated to fulfil the following requirements:
- Weight savings.
- Be cost effective.
- Meet structural requisite under aircraft conditions.
- Beneficial cost/weight relation.

The conventional method for joining cured composite material parts is mechanical bonding, particularly by means of rivets. A technical problem to be solved in the state of the art is how to avoid the use of rivets in the assembly of different cured parts in order to save weight in the overall structure.

Another disadvantage of using mechanical bonding to join two cured parts is that any gaps which might arise between the surfaces of the parts to be joined, due to their manufacturing tolerances, will have to be filled by a shim adding weight and complicating the assembly operation. It would thus be desirable to provide a joint capable of absorbing said manufacturing tolerances of the parts to be joined.

In the present description the following terms are defined as:
- Co-curing: the process of joining two composite laminates provided in a fresh state by means of a single curing cycle. The resulting joint is certified for primary structures.
- Co-bonding: the process of joining a composite laminate provided in a fresh state to a cured composite laminate by means of a curing cycle and the application of an adhesive along the joining surface of the laminates. The resulting joint is certified for primary structures.
- Bonding: the process of joining two cured composite parts by means of an adhesive material. It is not certified for joining primary structures.
- Mechanical bonding: the process of joining two parts by means of fastening means, such as rivets or bolts. The resulting joint is certified for primary structures.

In the present description it is understood by "primary structures" those structures whose failure or rupture would imply catastrophic consequences for an aircraft when flying. Therefore, certification for such structures is more demanding in terms of requirements than certification for secondary structures, whose failure or rupture would not imply catastrophic consequences for an aircraft when flying.

Another technical problem to be solved by the present invention is how to join primary structures avoiding the use of rivets and still complying with certification for primary structures.

### SUMMARY OF THE INVENTION

The present invention provides a solution for the aforementioned problems by a laminate according to claim 1, a method for joining two parts according to claim 4, and a system according to claim 8.

In a first aspect of the invention there is provided a *laminate for joining parts of composite material that comprises:*
- *a first layer of adhesive material,*
- *a second layer comprising a preimpregnated composite material, adjacent to the first layer, and*
- *a third layer of adhesive material, adjacent to the second layer.*

In the present invention the layer of preimpregnated composite material will comprise at least one layer of reinforcing fiber embedded in a resin matrix.

The orientation of the fibres within the second layer of the laminate will be determined according to the loads which will be applied to the resulting part.

The laminate is suitable for joining parts, particularly parts of composite material which are already cured.

In a second aspect of the invention there is provided a *method for joining at least two parts of composite material with a laminate according to the first aspect of the invention, comprising the steps of:*
- *providing already cured composite material parts,*
- *positioning the laminate for joining between the two cured parts,*
- *applying pressure and temperature to the whole structure comprising the at least two parts and the laminate, in such a way that the laminate is cured and the at least two parts are joined together in a resulting structure.*

The two parts are joined together during the step in which pressure and temperature are applied to the whole structure and in which the resin in the second layer of the joining laminate is polymerized.

The fact that the parts to be joined are already cured means that they have sufficient rigidity to be able to evenly distribute the pressure applied to the whole structure from the outside to the bonding area.

The temperature is increased locally in the bonding area of the joint of the two parts in order to perform the curing cycle of the second layer of the joining laminate. This involves an efficient use of energy as heat is only provided where it is needed and waste is reduced. This method also takes advantage of the fact that cured composite materials support further curing cycles without a loss in their properties.

As temperature increases during the curing cycle, the resin in the second layer of the laminate turns liquid. Advantageously this allows the resin to be distributed along the two cured surfaces and among the fibres of the laminate. This, along with the uniform pressure applied on the joining laminate by means of the cured parts to be joined, means that the resin fills any gaps which might result from the positioning of the two cured parts prior to the curing cycle due to their manufacturing tolerances. Once the resin is polymerized, the positioning of the parts and the pressure applied to it will provide a joint structure with the desired geometry.

Thus, the application of pressure during the curing cycle allows:
- reaching a good compaction, eliminating porosity, and
- obtaining the targeted thickness, while absorbing manufacturing tolerances of the parts to be joined.

The positioning of the three parts must be precise to absorb:
- tolerances in positioning when the surfaces of the parts to be joined are not completely flat or
- tolerances in manufacturing when the parts have irregular zones due to manufacturing process.

This invention enables the integration of complex structures by bonding from simple parts (previously verified) by means of a curing cycle which can be performed outside an autoclave, so there are major advantages in industrialization.

Advantageously, NDT and trimming is minimized for the resulting structure due to the fact that the composite parts have been already verified by NDT and trimmed to final shape before the "double co-bonding". Only a minor inspection of the joint area is needed, allowing high integration at a low cost.

The process, in the scope of the invention is named as double co-bonding. The process of double co-bonding, in other words, is making a type of bonding but substituting the adhesive for a "sandwich" of:
- adhesive, which can be any type of adhesive used in the state of the art for co-bonding.
- prepreg, and
- adhesive.

The invention is based on co-bonding technique. As explained, co-bonded joints are used between two components, one cured and one fresh with an intermediate adhesive, followed by a curing cycle. The result is a structural co-bonding between the parts. By also including a layer of preimpregnated composite material in the joining laminate and by co-bonding the whole structure, there is provided a joint with the properties of a co-bonded joint between two uncured parts. Thus, the present method could be used to join primary structures.

The advantages encountered are:
- avoiding the use of rivets for joining two cured parts, and therefore saving weight,
- having a structural joint which ensures gap shimming between cured parts.

In a third aspect of the invention there is provided a system for joining two parts of composite characterized in that it comprises:
- at least two hot-plates adapted for applying pressure and temperature,
- positioning means adapted for positioning the two parts in such a way that they are joined using a laminate according to the first aspect of the invention, and
- control means adapted to carry out the steps of a method according to the second aspect of the invention.

In a fourth aspect of the invention there is provided an *aircraft which comprises at least one structure whose parts have been joined with a method for joining at least two parts made of composite material according to the invention.*

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a laminate (3) according to the invention, the three layers are represented so the layers can be seen (3.1, 3.2, 3.3).
- Figure 2: This figure represents the two parts (1, 2) to be joined using a laminate (3) according to the invention. Temperature and pressure are applied in the base of first part (1) and on the second part (2), by the use of a hot plates press, for example, thus saving energy as temperature is only applied locally.
- Figure 3a: This figure shows two parts (1, 2) which are joined using a laminate (3) according to the invention wherein the tolerances in positioning and manufacturing are absorbed.
- Figure 3b: This figure shows two parts (1, 2) which are joined using a laminate (3) according to the invention wherein the resin and fiber layer (3.2) and he adhesive layers (3.1, 3.3) adapt to the waving imposed by the parts (1, 2).
- Figure 4: This figure shows a representation of a hot-plates press (9) positioned as to apply pressure and temperature on two parts (1, 2) made of composite.

### DETAILED DESCRIPTION OF THE INVENTION

Once the object of the invention has been outlined, specific non-limitative embodiments are described hereinafter.

All the features described in this specification (including the claims, description and drawings) can be combined in any combination, with the exception of combinations of such mutually exclusive features.

### Laminate (3) for joining at least two parts (1, 2)

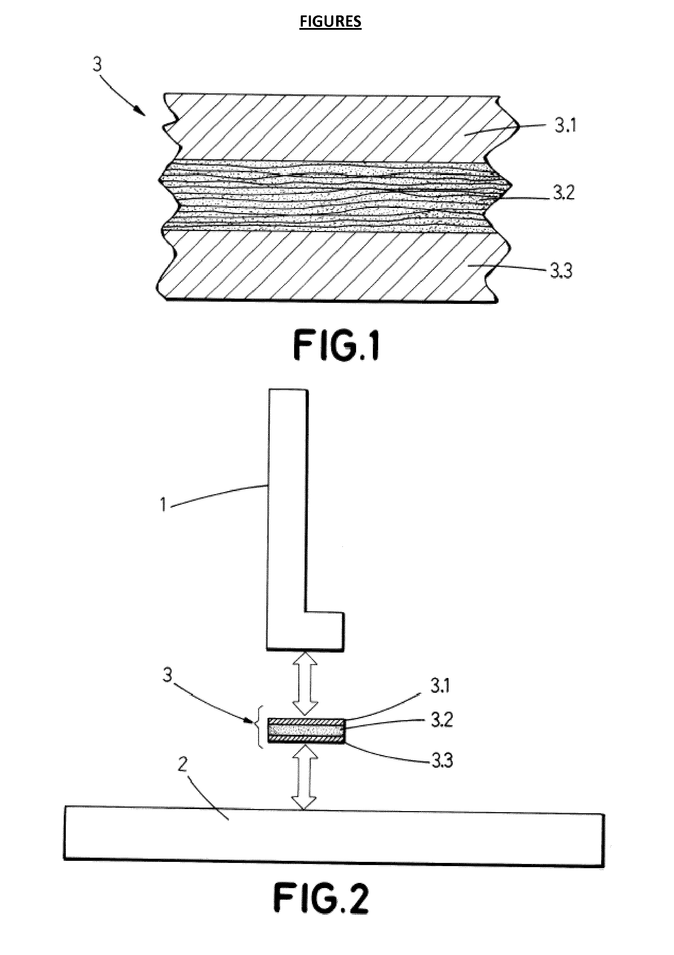

As shown in figure 1, the laminate (3) comprises:
- a first layer (3.1) of adhesive material,
- a second layer (3.2) of preimpregnated composite material, adjacent to the first layer (3.1), and
- a third layer (3.3) of adhesive material, adjacent to the second layer (3.2).

The laminate (3) allows loads to be transmitted between the two parts (1, 2). The loads are supported by the parts (1, 2) to be joined but not by the laminate (3).

The role of the fibres in the second layer (3.2) is not directed to support the loads, or to transmit the loads between the two parts (1, 2). The loads are transmitted by means of the resin matrix of the second layer (3.2) and the role of the fibres in said second layer (3.2) is to hold together the resin matrix. In a particular example, the number of fibres is minimized in order to minimize the weight penalty of the solution.

In a particular embodiment the total thickness of the second layer (3.2) is minimized. Advantageously this fact reduces the momentum resulting in one of the parts to be joined as a result of the application of a shear force on the other part.

The laminate comprises a second layer (3.2) made of at least one layer of fresh fiber. The second layer (3.2) may comprise a few layers of resin and fiber in the orientation that is considered more adequate for each case to be considered.

In a particular embodiment of a laminate (3), for example used for double co-bonding stringers of an aircraft, the orientation of the few layers of resin and fiber of the second layer (3.2) at the end of the stringers is 0º.

In a particular embodiment of a laminate (3), for example used for double co-bonding stringers of an aircraft, the orientation of the few layers of resin and fiber of the second layer (3.2) at the end of the stringers is 45º.

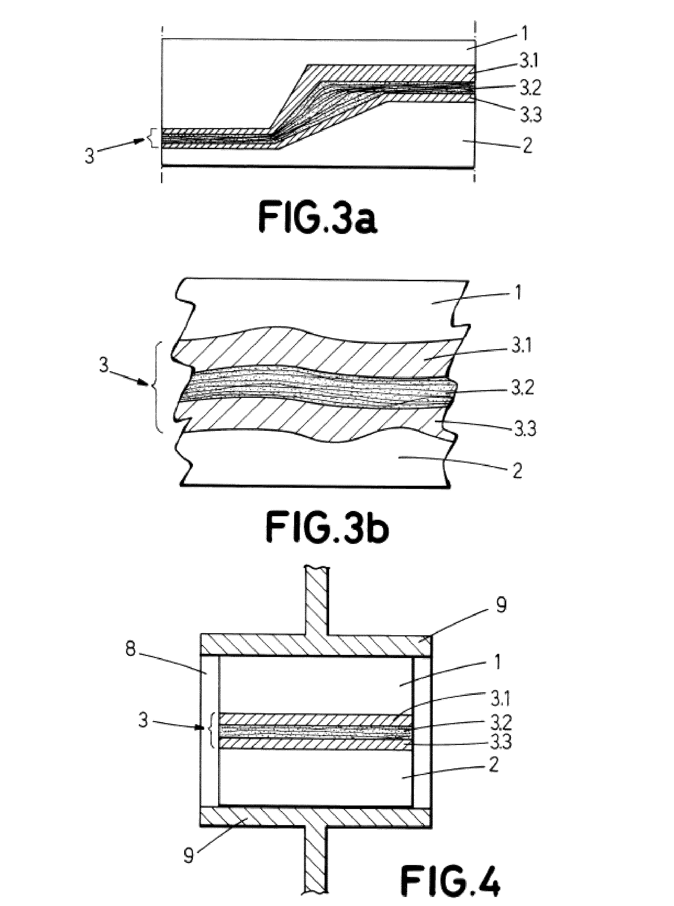

One of the advantages derived from the use of the laminate (3) for joining parts (1, 2) is that the laminate (3), before being cured, can be adapted to different shapes, for example those parts (1, 2) with lack of precision in manufacturing and/or positioning, like the one shown in figure 3a. In figure 3a there are shown two parts (1, 2) which are joined using a laminate (3) according to the invention wherein the tolerances in positioning and manufacturing are absorbed. The fibres in the second layer (3.2) are distributed in the center of the laminate (3) in order to take the whole space given between the two parts (1, 2) to be co-bonded.

Another example of the advantageous adaptability is shown in figure 3b. In figure 3b there are shown two parts (1, 2) which are joined using a laminate (3) according to the invention wherein the second layer (3.2) and the adhesive layers (3.1, 3.3) adapt to the waving imposed by the parts (1, 2).

### Method for joining at least two parts (1, 2) with a laminate (3)

The parts (1, 2) to be joined, are made of composite material and they are already cured by a curing (4) process.

The method comprises the steps of:
- providing parts (1, 2) already cured,
- positioning the laminate (3) for joining between the two cured parts (1, 2),
- applying pressure and temperature to the whole structure comprising the at least two parts (1, 2) and the laminate (3), in such a way that the laminate (3) is cured and the at least two parts (1, 2) joined together in a resulting structure.

In a particular embodiment the three steps described in the method are accomplished in a single machine.

Resin is distributed along the waving or the asymmetries of the parts (1, 2) during positioning, as shown in figures 3a and 3b by means of the application of a uniform pressure.

In a particular embodiment positioning is made by positioning means which achieve the required tolerances. The tolerances depend on the component being joined and its shape.

In figure 2 two parts (1, 2) to be joined using a laminate (3) according to the invention are represented. Temperature and pressure are applied only:
- on the base of first part (1), which can be for example a stringer, and
- on the second part (2),
locally with no need of autoclave.

In the case represented in figure 2, the method allows applying temperature only on the base of the stringer (1) and on second part (2), which allows therefore performing a curing cycle with no need of autoclave, thus optimizing energy consumption. Thus, the curing cycle is not conceived, in the context of the invention, as a costly curing cycle, but as a simple curing cycle which can be performed by the use of, for example, a hot-plate press (9). This represents advantages in industrialization compared with solutions requiring the use of autoclave.

As described, in a particular embodiment to cure the auxiliary laminate (3) pressure and temperature are applied via a hot-plates press (9), as shown in figure 4 where there is shown a representation of a hot-plates press (9) applying pressure and temperature on two parts (1, 2) positioned on both external layers (3.1, 3.3) of a laminate (3) according to the invention. The figure also shows a sealing (8) on the edges of the laminate (3). Advantageously the sealing avoids resin to be drained out when pressure is applied.

In a particular embodiment a hot-plates press (9) is one of the possible solutions, but many other can be adapted for these propose.

Advantageously, the parts (1, 2) made of composite allow the heat to be transmitted through them towards the laminate (3) to be cured by the use of the hot-press plates (9).

In a particular embodiment the temperature is within the range of 160-190 degrees Celsius for improving polymerization of the fibers.

In a particular embodiment preparation of cured surface of the at least two parts (1, 2) and the fresh surfaces of the laminate (3) is performed via peel ply or surface preparation as in a co-curing of the state of the art.

### System for joining two parts (1, 2) of composite

A system for joining two parts (1, 2) of composite according to the invention is characterized in that it comprises:
- at least a hot-plates press (9) adapted for applying pressure and temperature,
- positioning means (4) adapted for positioning the two parts in such a way that they are joined using a laminate (3), and
- control means adapted to carry out the steps of a method according to the invention.

## Claims

1. Laminate (3) for joining parts (1, 2) of composite material that comprises:
• a first layer (3.1) of adhesive material,
• a second layer (3.2) of at least a preimpregnated composite material, adjacent to the first layer (3.1), and
• a third layer (3.3) of adhesive material, adjacent to the second layer (3.2).

2. Laminate (3) for joining parts (1, 2) according to claim 1 **characterized in that** the second layer (3.2) comprises at least two layers of fresh fiber which are laid at 0º.

3. Laminate (3) for joining parts (1, 2) according to claim 1 **characterized in that** the second layer comprises at least two layers of fresh fiber which are laid at 45º.

4. Method for joining at least two parts (1, 2) of composite material with a laminate (3) according to any of claims 1 to 3, comprising the steps of:
• providing already cured composite material parts (1, 2),
• positioning the laminate (3) for joining between the two cured parts (1, 2),
• applying pressure and temperature to the whole structure comprising the at least two parts (1, 2) and the laminate (3), in such a way that the laminate (3) is cured and the at least two parts (1, 2) are joined together in a resulting structure.

5. Method according to claim 4 **characterized in that** positioning is made with positioning means (4).

6. Method according to claim 4 or 5 **characterized in that** pressure and temperature are applied with a hot-plates press (9) via an out of autoclave process.

7. Method according to any one of claims 4 to 6 **characterized in that** the parts (1, 2) comprise a cured surface which is performed via peel ply or surface preparation.

8. System for joining two parts (1, 2) of composite **characterized in that** it comprises:
• at least a hot-plates press (9) adapted for applying pressure and temperature,
• positioning means (4) adapted for positioning the two parts in such a way that they are joined using a laminate (3) according to any of claims 1 to 3, and
• control means adapted to carry out the steps of a method according to any of claims 4 to 7.

9. Aircraft comprising at least one structure whose parts have been joined with a method according to any of claims 4 to 7.
